# EUROPEAN PATENT APPLICATION

(11) **EP 1 203 628 A2**
(43) Date of publication of application: **08.05.2002**
(21) Application number: 01309160.8
(22) Date of filing: 29.10.2001
(51) Int. Cl.: B23D 51/01, B23D 49/16

(54) **Handle arrangement for a reciprocating saw**

(30) Priority: 02.11.2000 US 704914
(71) Applicant: MILWAUKEE ELECTRIC TOOL CORPORATION, Brookfield Wisconsin 53005 (US)
(72) Inventor: Neitzell, Roger Dean, North Prairie, Wisconsin 53153 (US); Griep, David Brian, Rubicon, WI 53078 (US); James, Thomas Paul, Oconomowoc, WI 53066 (US)
(74) Representative: Holmes, Matthew Peter

(57) **Abstract**

A reciprocating saw. The reciprocating saw includes a reciprocable spindle for supporting a saw blade for reciprocating sawing movement, a body housing a motor and a drive mechanism driven by the motor, the drive mechanism being operably connected to the spindle for causing reciprocation of the spindle, the body having a forward end supporting the spindle and a rearward end, and a hand grip (22) connected to the rearward end of the body, the hand grip being supported for movement relative to the body. Preferably, the hand grip is pivotable relative to the body.

## Description

### BACKGROUND OF THE INVENTION

The present invention relates to reciprocating saws and, more particularly, to a handle arrangement for a reciprocating saw.

A reciprocating saw generally includes a housing supporting a motor and a drive mechanism. The motor and the drive mechanism operate to reciprocate a spindle and a saw blade supported by the spindle. Typically, a main operator's handle is integrally-formed with the rearward portion of the housing. The fixed handle reciprocating saw is gripped by the operator with one hand on a forward portion of the housing and the other hand on the main operator's handle.

U.S. Patent No. 5,940,977 discloses a reciprocating saw including a motor supported in a first housing and an angular blade drive train supported in a second housing. The drive train and the second housing are pivotable relative to the first housing and relative to the motor. A main operator's handle is formed with the first housing for movement with the first housing.

### SUMMARY OF THE INVENTION

One problem with a fixed handle reciprocating saw, is that, in some cutting operations, the operator may prefer a different handle position than the position in which the handle was formed. For example, the operator may prefer a position in which the operator's hands are in-line or, alternatively, a position in which the operator's hands are generally perpendicular to one another.

Another problem with the fixed handle reciprocating saw is that the length of the reciprocating saw, from forward-most portion of the housing to the rearward-most portion of the reciprocating saw, is not adjustable. The typical fixed handle reciprocating saw is too long for some cutting operations, such as between 16 inch on-center studs used in many construction operations.

One problem with the reciprocating saw illustrated in U.S. Patent No. 5,940,977 is that, because the motor and the operator's handle are pivotable relative to the drive mechanism, the manufacturing tolerances of the inter-engaging components of the motor and the drive mechanism must be extremely small to maintain the driving engagement between the motor and the drive mechanism. This greatly increases the cost and complexity of manufacturing the reciprocating saw.

Another problem with the reciprocating saw illustrated in U.S. Patent No. 5,940,977 is that, because of the movable engagement of the motor and the drive mechanism, the type of drive mechanism that may be used in the reciprocating saw is limited. For example, with a wobble plate drive mechanism, the movable engagement between the motor and the wobble plate shaft is difficult and expensive to design and manufacture.

Yet another problem with the reciprocating saw illustrated in U.S. Patent No. 5,940,977 is that, because of the relative movement between the motor and the drive mechanism, the junction of the motor housing and the drive mechanism housing is difficult to seal, and, as a result, contaminants and debris may enter the housings, damaging or affecting the operation of the motor and/or of the drive mechanism.

A further problem with the reciprocating saw illustrated in U.S. Patent No. 5,940,977 is that, in some adjusted positions, the main operator's handle of the reciprocating saw is awkward and uncomfortable for an operator to grip. Also, to make some types of cuts in a comfortable manner, the reciprocating saw may need to be inverted, and, to perform the cutting operation, the saw blade may then have to be adjusted. In addition, in some positions, a portion of the operator's body may be placed in the way of the reciprocating saw blade.

The present invention provides, among other things, a handle arrangement for a reciprocating saw that alleviates the problems with the above-described reciprocating saws and handle arrangements. Generally, in some aspects, the invention provides a reciprocating saw that includes a handle that is movable relative to the motor, the drive mechanism and the body which houses the motor and drive mechanism.

More particularly, the invention provides a reciprocating saw comprising a spindle, a body housing a motor and a drive mechanism, and a hand grip movably connected to the rearward end of the body. Preferably, the hand grip is pivotable relative to the body. Also, the hand grip is preferably movable relative to the motor and relative to the drive mechanism. In addition, the hand grip may be connected to the body rearwardly of the motor. Preferably, the hand grip is movable relative to the body to change the length of the reciprocating saw, measured from the forward-most portion of the body to the rearward-most portion of the saw.

Preferably, the reciprocating saw also includes a locking mechanism, such as an inter-engaging recess and projection, to lock the hand grip in a position relative to the body. Also, the reciprocating saw preferably includes connecting means, such as a wiring arrangement, to accommodate movement of at least a portion of an on/off switch assembly with the hand grip and relative to the motor.

Also, the invention provides a housing assembly for a reciprocating saw. The housing assembly includes a body for housing the motor and the drive mechanism and a hand grip movably connected to the body. Preferably, the hand grip is pivotally connected to the body.

In addition, the invention provides a reciprocating saw including a body providing a first grip surface and a hand grip connected to the body and providing a second grip surface. The hand grip is movable relative to the body between a first position, in which the grip surfaces are aligned with and along the longitudinal axis of the body, and a second position, in which the second grip surface is misaligned with the body axis. In the second position, the hand grip preferably forms an obtuse angle with respect to the body axis. Also, in the second position, the second grip surface may be substantially perpendicular to the body axis.

Further, the invention provides a method of operating a reciprocating saw. The method includes the acts of positioning the hand grip relative to the body with the grip surfaces aligned with and along the body axis, and moving the hand grip such that the second grip surface is misaligned with the body axis.

Also, the invention provides a reciprocating saw including a motor, a drive mechanism, a housing assembly housing the motor and the drive mechanism, and a battery removably connected to the housing assembly and electrically connectable with the motor. The battery is connectable to the rearward end of the housing assembly and in a direction generally perpendicular to the housing assembly axis. Preferably, the housing assembly includes a body and a hand grip movably connected to the body, and the battery is connected to the second end of the hand grip. Also, the battery is preferably reversibly supported on the housing assembly.

In some aspects, the body houses at least the drive mechanism, and the drive mechanism includes a gear and a drive arm connected to the gear and the spindle. Preferably, the hand grip is pivotable about a pivot axis parallel to and rearward of the gear axis. Also, in some aspects, the spindle axis and the motor drive shaft axis preferably lie in a vertical plane through the body.

One independent advantage of the present invention is that the hand grip is movable relative to the body, the motor and the drive mechanism to allow the operator to position the hand grip as desired for a given cutting operation. As a result, the operator can adjust the hand grip to a position that is most comfortable and allows the greatest control of the reciprocating saw during cutting operations.

Another independent advantage of the present invention is that, because the motor and the drive mechanism are not movable as a unit relative to one another but are movable together relative to the hand grip, the reciprocating saw is easier and less costly to manufacture and assemble.

Yet another independent advantage of the present invention is that, because the motor and the drive mechanism are not movably arranged, a greater number of types of drive mechanisms are usable, and, existing motor and drive mechanism assemblies may be used with the present movable handle arrangement.

A further independent advantage of the present invention is that, the junction between the drive mechanism and the motor is sealed more easily, preventing contamination and damage to the motor and/or the drive mechanism.

Another independent advantage of the present invention is that the hand grip is adjustable to the most comfortable position allowing the greatest control of the reciprocating saw. Also, in the adjusted positions, the operator is not placed in the way of the reciprocating saw blade.

Other independent features and advantages of the present invention will become apparent to those skilled in the art upon review of the following detailed description, claims and drawings.

### BRIEF DESCRIPTION OF THE DRAWINGS

Figs. 1A and 1B are side views of the reciprocating saw embodying the invention and illustrating the adjustment of the hand grip.
Figs. 2A and 2B are perspective views of the reciprocating saw as shown in Figs. 1A and 1B, respectively.
Figs. 3A and 3B are side views the reciprocating saw with portions cut away and illustrating the wiring arrangement.
Figs. 4A and 4B are side views of the reciprocating saw with portions cut away and illustrating the locking assembly in the locked position and the unlocked position, respectively.
Figs. 5A and 5B are partial cross-sectional views taken along line 5A--5A and 5B--5B in Figs. 4A and 4B, respectively.
Fig. 6 is a side view the reciprocating saw with portions cut away and illustrating the drive mechanism and the spindle.
Fig. 7 is a cross-sectional view taken generally along line 7--7 in Fig. 6.
Figs. 8-10 are side views of the reciprocating saw similar to that in Fig. 6 and illustrating the operation of the rocker motion mechanism.

Before one embodiment of the invention is explained in detail, it is to be understood that the invention is not limited in its application to the details of the construction and the arrangements of the components set forth in the following description or illustrated in the drawings. The invention is capable of other embodiments and of being practiced or carried out in various ways. Also, it is understood that the phraseology and terminology used herein is for the purpose of description and should not be regarded as limiting.

### DETAILED DESCRIPTION OF THE PREFERRED EMBODIMENT

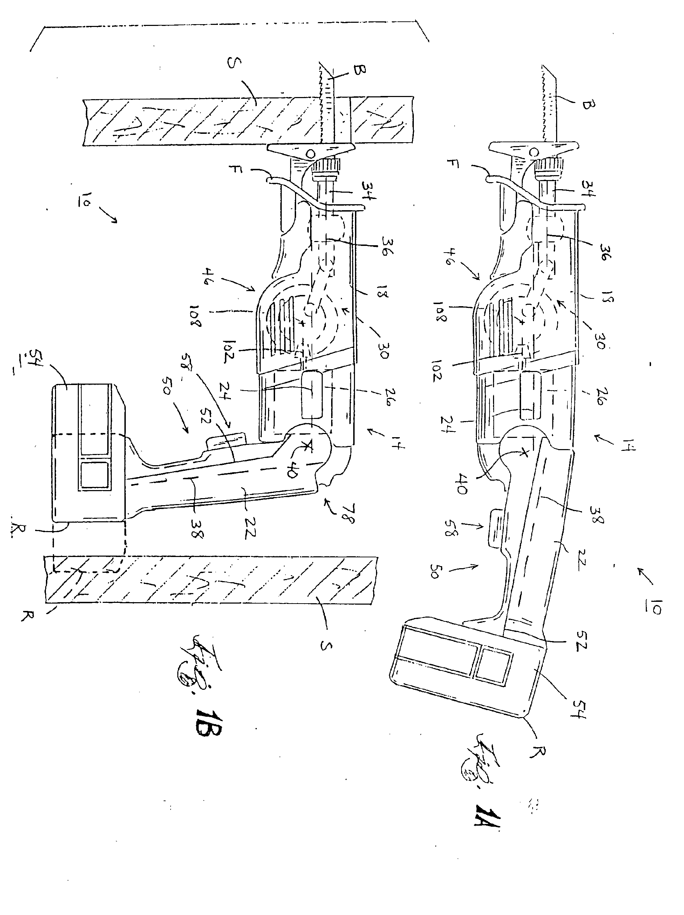

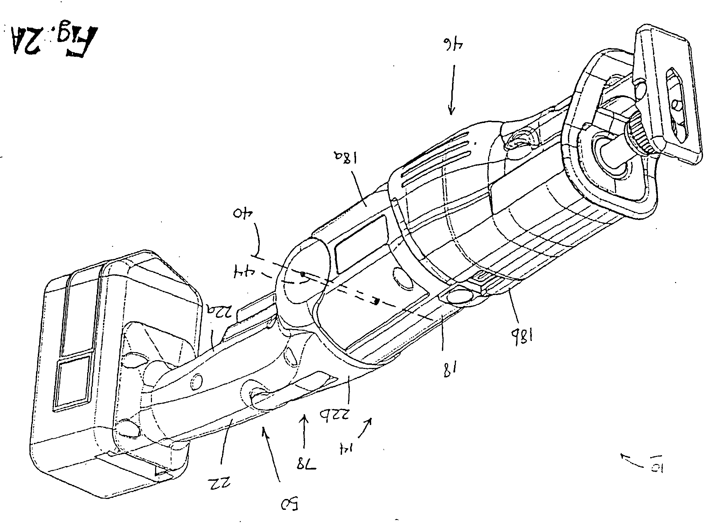

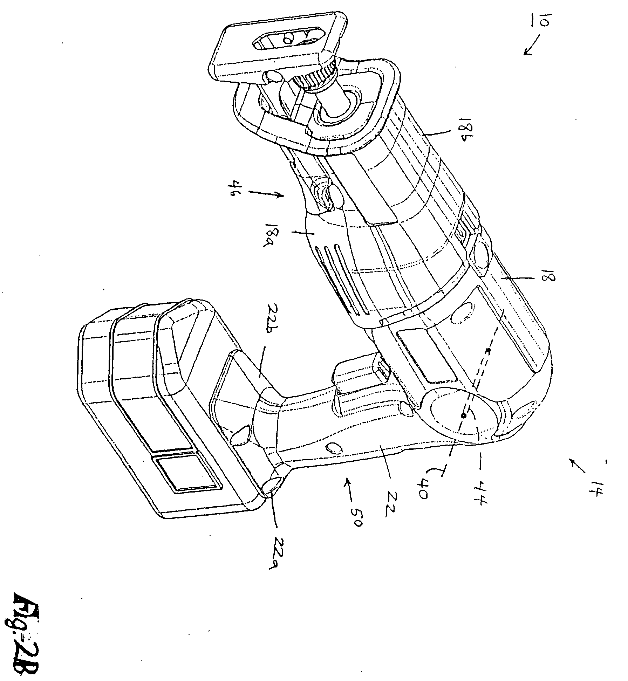

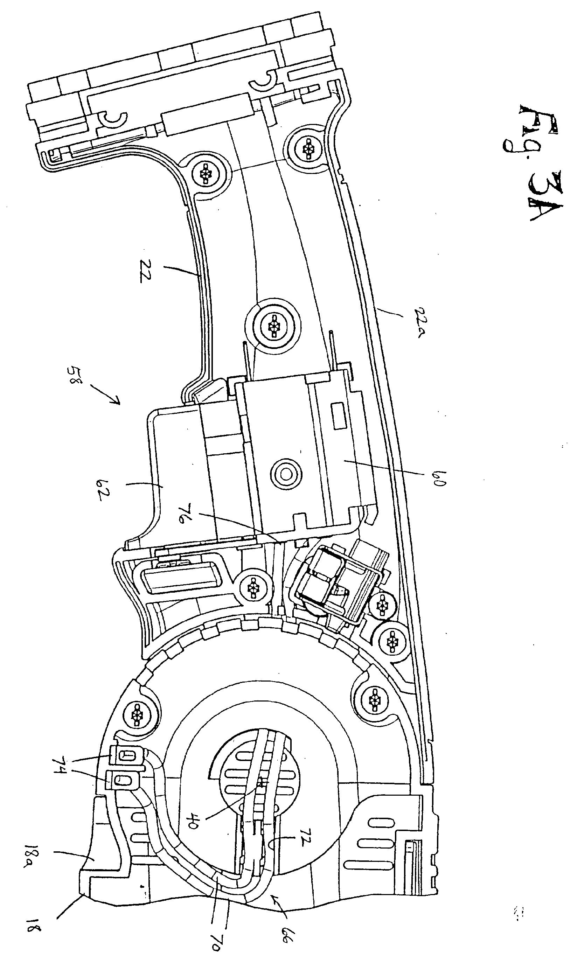

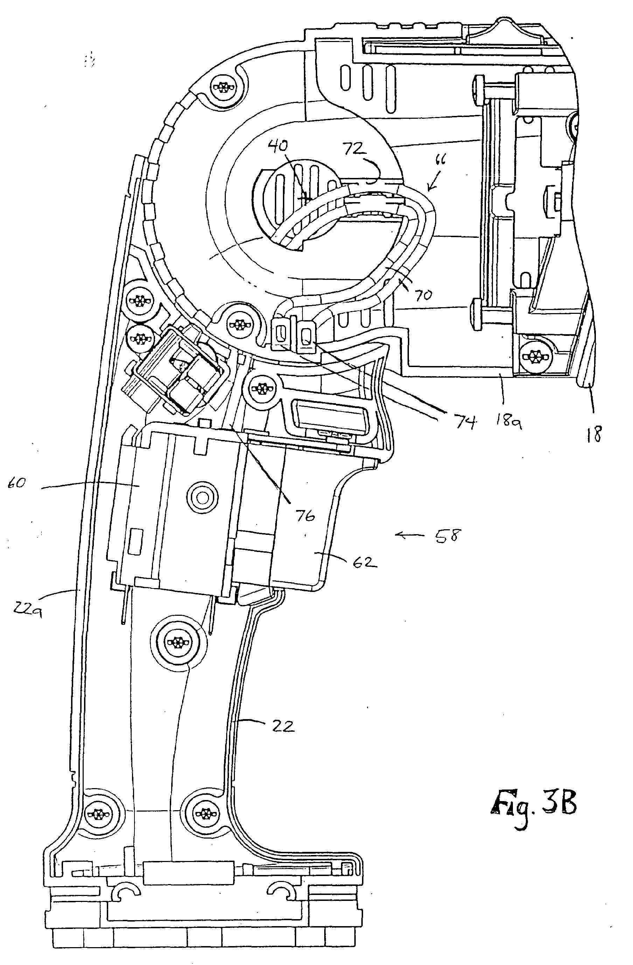

A reciprocating saw 10 embodying the invention is illustrated in Figs. 1A and 1B. The reciprocating saw 10 includes a housing assembly 14 including a forward housing portion or body 18 and a main operator's handle portion or hand grip 22.

The body 18 defines a longitudinal body axis 24 and houses a motor 26 and a drive mechanism 30. While in the illustrated construction, the body 18 houses both the motor 26 and the drive mechanism 30, in other constructions (not shown) and in some aspects of the invention, the body 18 houses only one or at least one of the motor 26 and the drive mechanism 30. The motor 26 and the drive mechanism 30 are operable to reciprocate a spindle 34 generally along a spindle axis 36. The spindle 34 is adapted to support a saw blade B for cutting a workpiece W.

In the illustrated construction, the hand grip 22 is movably and, preferably, pivotably connected to the rearward end of the body 18 and rearwardly of the motor 26. The hand grip 22 defines a grip axis 38 and is supported for pivotal movement about a pivot axis 40. In the illustrated construction, the pivot axis 40 is substantially perpendicular to both the body axis 24 and the grip axis 38. Also, in the illustrated construction, the pivot axis 40 is perpendicular to and below the spindle axis 36.

It should be understood that, in other constructions (not shown), the orientation of the axes 24, 38 and 40 may be different, such as generally parallel or skew. Also, the hand grip 22 may be movable in other manners, such as slidably or pivotably about two axes (i.e., about the pivot axis 40 and about an axis parallel to the body axis 24 and/or to the grip axis 38). In addition, in some aspects of the invention, the hand grip 22 may be non-movably connected to or formed with the body 18.

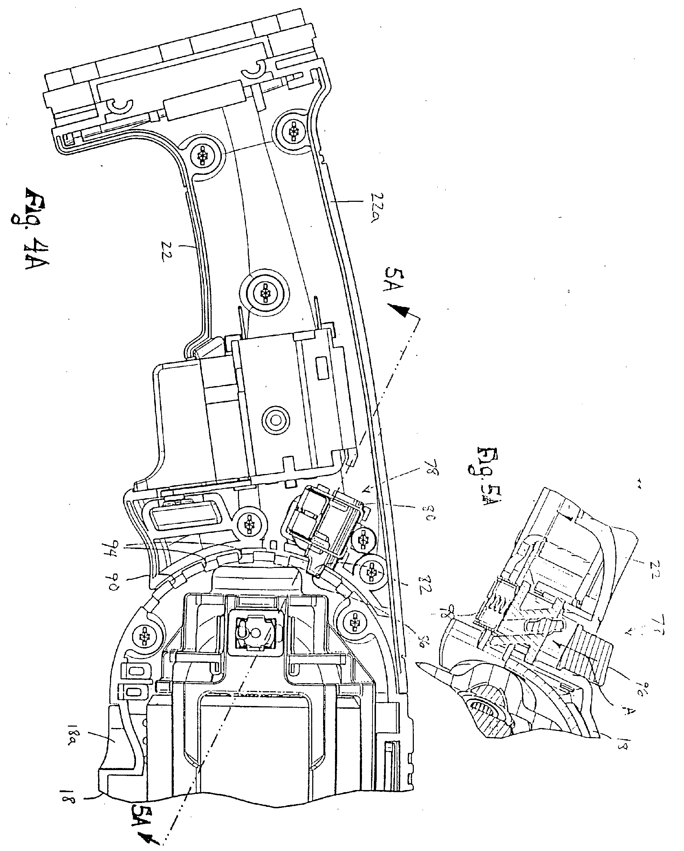

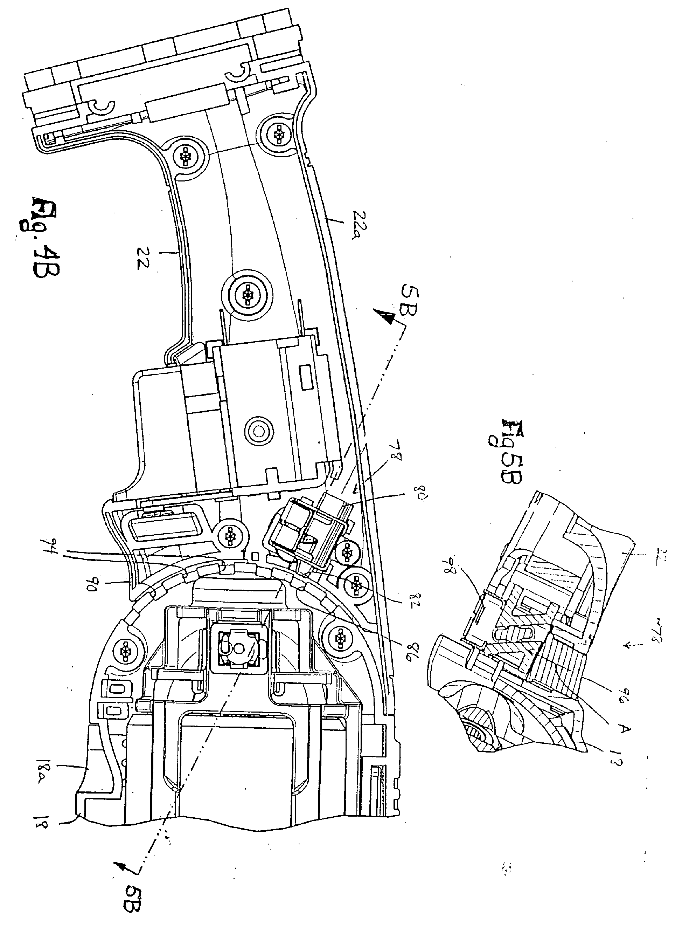

In the illustrated construction (see Figs. 2-4), the body 18 is formed of two body halves 18*a* and 18*b* (only one shown in Figs. 3-4). Similarly (see Figs. 2-4), the hand grip 22 is formed of two grip halves 22*a* and 22*b* (only one shown in Figs. 3-4). The first end of the hand grip 22 sandwiches the rearward end of the body 18. A pivot pin 44, defining the pivot axis 40, extends through the first end of the hand grip 22 and through the rearward end of the body 18 to pivotally connect the hand grip 22 to the body 18.

The body 18 provides a generally cylindrical first grip surface 46, and the hand grip 22 provides a generally cylindrical second grip surface 50. The hand grip 22 is movable relative to the body 18 between a first position (shown in Figs. 1A and 2A), in which the first grip surface 46 and the second grip surface 50 are generally aligned with and along the body axis 24, and a second position (shown in Figs. 1B and 2B), in which the second grip surface 50 is misaligned with the body axis 24. In the second position, the hand grip 22 is positioned so that the second grip surface 50 defines an obtuse angle with respect to the body axis 24. The hand grip 22 may be movable to a position in which the second grip surface 50 is generally perpendicular to the first grip surface 46 and to the body axis 24.

Also, as illustrated in Figs. 1A and 1B, the hand grip 22 is pivotable relative to the body 18 to change the length of the reciprocating saw 10, measured from the forward-most portion F of the body 18 to the rearward-most portion R of the reciprocating saw 10, such as, for example, the rearward portion of the hand grip 22. In the position shown in Fig. 1A, the reciprocating saw 10 has a first length, which is generally longer than the distance between two 16 inch on-center studs S used in construction operation. In the position shown in Fig. 1B, the hand grip 22 is moved so that the reciprocating saw 10 has a second length, shorter than the first length and generally shorter than the distance between the studs S.

The motor 26 is an electric motor that is connectable to a power source, such as a battery 54, by an electrical circuit 52 (partially illustrated). However, in other constructions (not shown), the motor 26 may be powered by another power source, such as, for example, by a power cord connected to a AC power source or to a DC power source. The electrical circuit 52 includes (see Figs. 3A and 3B) an on/off switch assembly 58 which is operable to connect the motor 26 to the power source. The switch assembly 58 includes and on/off switch 60 and a trigger 62 supported on the hand grip 22 and operating the switch 60.

At least a portion of the switch assembly 58, such as the trigger 62 and the switch 60, is movable with the hand grip 22 relative to the body 18 and relative to the motor 26. To accommodate this movement, the electrical circuit 52 also includes connecting structure to electrically connect the movable portion of the switch assembly 58 to the motor 26.

The connecting structure includes (see Figs. 3A and 3B) a wiring arrangement 66 to accommodate movement of the switch 60 and the trigger 62 relative to the motor 26. The wiring arrangement 66 includes wires 70 having a sufficient length and arranged in such a manner to accommodate movement of the switch 60 relative to the motor 26. The wiring arrangement 66 accommodates movement of the switch 60 relative to the motor 26 so that, in any position of the hand grip 22 relative to the body 18, the switch 60 is operable to selectively connect the motor 26 to the power source.

In the illustrated construction, the wiring arrangement 66 electrically connects the switch 60 to the motor 26. The wiring arrangement 66 includes wires 70 extending from the switch 60 through an opening 72 in the body 18 and connected to the motor 26 by respective connectors 74. The rearward end of the opening 72 is positioned proximate the pivot axis 40 so that, during movement of the hand grip 22, the distance between the switch 60 and the opening 72 remains generally constant. The wiring arrangement 66 includes an amount of wire 70 sufficient to accommodate the distance between the switch 60 and the opening 72 when the hand grip 22 is moved to the extreme pivoted positions (shown in Figs. 1A and 1B) of the hand grip 22 relative to the body 18. The opening 72 limits the movement of one end of the wire 70 thereby locating the wire 70 during movement of the hand grip 22. Connectors 76 on the switch 60 limit the movement of the other end of the wires 70.

In another construction (not shown), the connecting structure may include other arrangements, such as a first fixed electrical conductor and a second movable electrical conductor. In such a construction, the first fixed conductor is supported one of the body 18 the hand grip 22 and electrically connected to the motor 26. The first fixed conductor extends along the path of movement of the hand grip 22 relative to the body 18. In this construction, the movable second conductor is supported on the other of the body 18 and the hand grip 22 and electrically connected to the switch 60. The second conductor is movably connected to the first conductor and moves along the first conductor to thereby maintain the electrical connection between the switch 60 and the motor 26 at any position of the hand grip 22 relative to the body 18.

In yet another construction (not shown), the connecting structure may include a remote transmitter and sensor combination to connect the switch 60 to the motor 26. In such a construction, the transmitter is fixed to and moves with the hand grip 22. The transmitter transmits a signal based on the condition of the switch 60, for example, an "ON" signal or an "OFF" signal. The sensor or receiver is mounted on the body 18 and electrically connected to the motor 26. The sensor senses the transmitted signal and, if, for example, the "ON" signal is transmitted, it connects the motor 26 to the power source. In this construction, the power source is directly connectable to the motor 26, rather than being connected through the switch assembly 58.

As discussed above, in the illustrated construction, the power source is the battery 54. The battery 54 is removably connected to the second end of the hand grip 22. The battery 54 is preferably slidably attached to the hand grip 22 in a direction generally perpendicular to the grip axis 38. Also, the battery 54 is reversible relative to the hand grip 22 between the position shown in solid lines in Fig. 1B and the position shown in phantom lines in Fig. 1B to change the center of gravity of the reciprocating saw 10. The battery 54 and the electrical circuit include the connectors (not shown) necessary to electrically connect the battery 54 to the electrical circuit and to physically connect the battery 54 to the hand grip 22 in either of the reversible position shown in Fig. 1B.

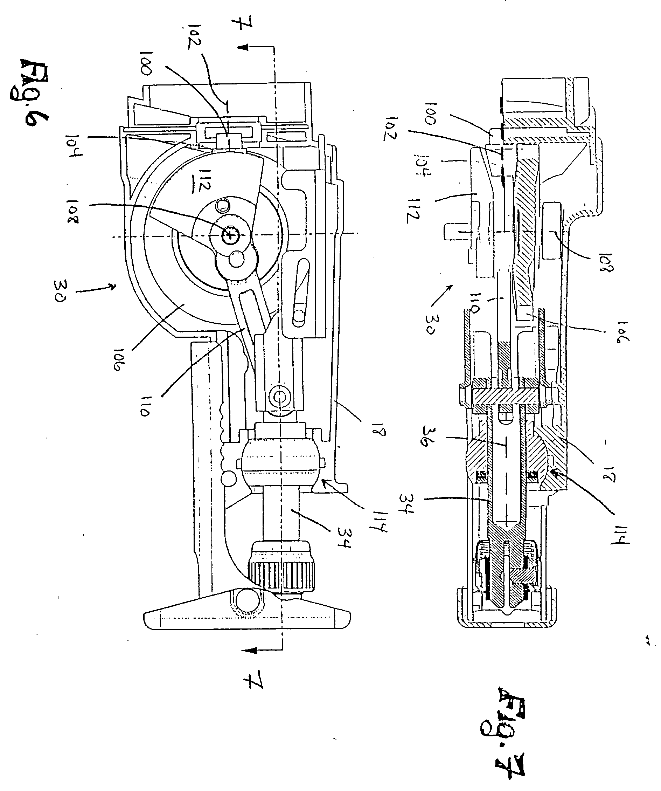

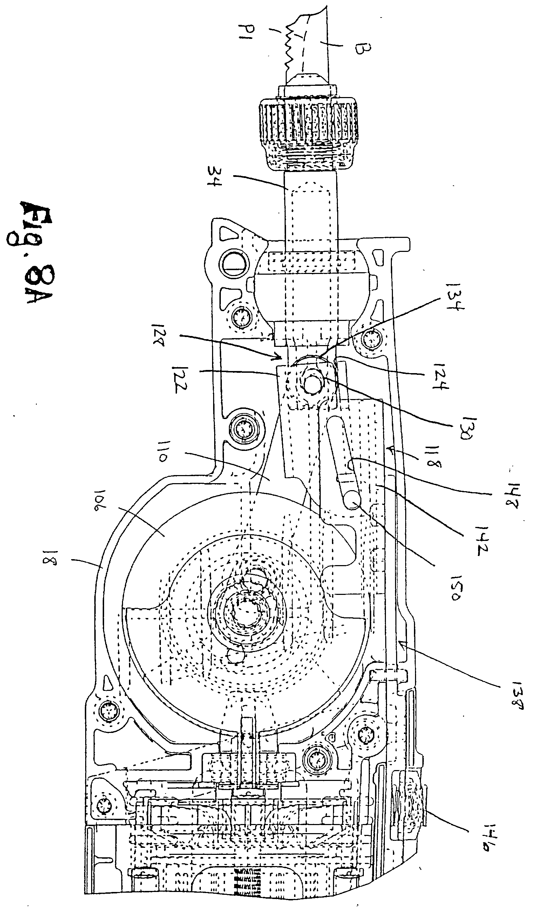

The reciprocating saw 10 also includes (see Figs. 4-5) a locking assembly 78 for locking the hand grip 22 in a position relative to the body 18. As explained in more detail below, the locking assembly 78 is operable between a locked position (shown in Figs. 4A and 5A), in which the hand grip 22 is fixed in a position relative to the body 18, and an unlocked condition (shown in Figs. 4B and 5B), in which the position of the hand grip 22 relative to the body 18 is adjustable.

In the illustrated construction, the locking assembly 78 includes (see Figs. 4-5) a detent arrangement between the hand grip 22 and the body 18 to provide a positive engagement between the hand grip 22 and the body 18. The locking assembly 78 includes a locking member 80 having a locking projection 82. The locking projection 82 is selectively engageable in a first recess 86, to fix the hand grip 22 in a first position relative to the body 18 (as shown in Fig. 1A and 4A), and a second recess 90, to fix the hand grip 22 in a second position relative to the body 18 (as shown in Fig. 1B). In the illustrated construction, the locking assembly 78 includes additional recesses 94 in which the locking projection 82 is engageable to fix the hand grip 22 in additional positions relative to the body 18.

The locking assembly 78 also includes (see Figs. 4B and 5B) an actuator 96 to move the locking member 80 from the locked position (shown in Figs. 4A and 4B) to the unlocked position (shown in Figs. 5A and 5B). The actuator 96 defines a groove, and the locking member 80 includes a cooperating projection. As the actuator 96 is depressed (in the direction of arrow A), the groove and projection engage to force the locking projection 82 out of the recess 86. A biasing member, such as a spring 98, biases the actuator 96 in a direction opposite to arrow A and, thereby, biases the locking member 80 to the locked position. The locking assembly 78 is thus biased to the locked condition.

To move the hand grip 22 relative to the body 18, the actuator 96 is operated (depressed in the direction of arrow A) to move the locking projection 82 out of engagement with the recesses 86, 90 and 94. The hand grip 22 is then moved relative to the body 18 to a position corresponding to engagement of the locking projection 82 with one of the recesses 86, 90 or 94. When the hand grip 22 is in the desired position, the locking projection 82 is moved by the spring 98 into the corresponding recess 86, 90 or 94.

In other constructions (not shown), the locking assembly 78 may include a different locking arrangement, such as a frictional engagement between the hand grip 22 and the body 18. In such a construction, the locking assembly 78 includes a clamping band movably supported on one of the body 18 and the hand grip 22 to releasably apply a clamping force to the other of the body 18 and the hand grip 22. Also, the locking assembly includes an actuating member for moving the clamping band between a locked position and an unlocked position corresponding to the locked condition and the unlocked condition, respectively, of the locking assembly 78. In such a construction, the locking assembly may also include a positive engagement arrangement, such as inter-engaging teeth formed on the body 18 and the hand grip 22 which are engaged when the clamping band is in the locked position.

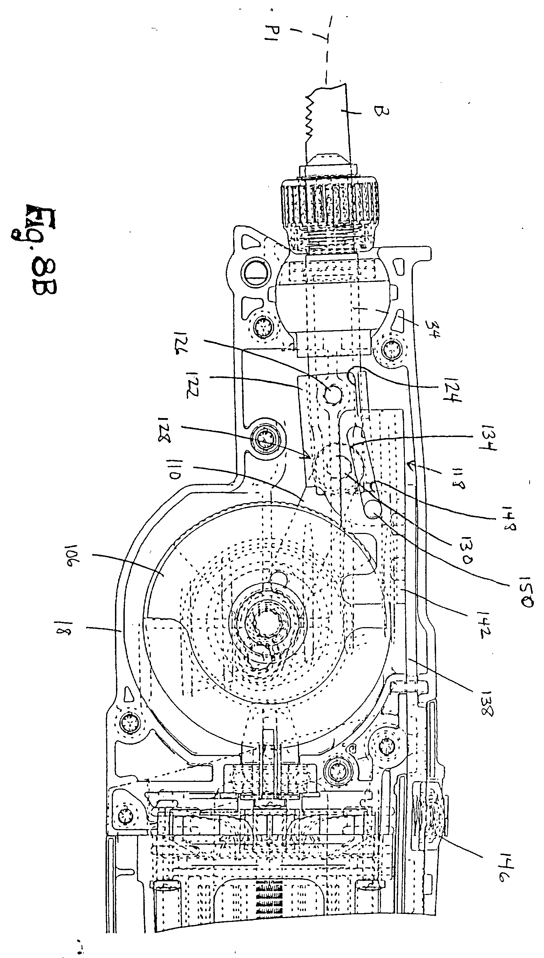

As shown in Figs. 6-7, the motor 26 includes a drive shaft 100 defining a drive shaft axis 102. A pinion 104 is supported on the end of the drive shaft 100. In the illustrated construction, the drive mechanism 30 includes a gear 106 which is rotatable about a gear axis 108 and which is drivingly engaged by the pinion 104. The drive mechanism includes a drive arm 110 eccentrically connected to the gear 106 and connected to the rearward end of the spindle 34 to cause reciprocation of the spindle 34 upon rotation of the gear 106. A counterweight 112 is rotatably supported for movement with the gear 106 to at least partially offset the force of the reciprocating spindle 34.

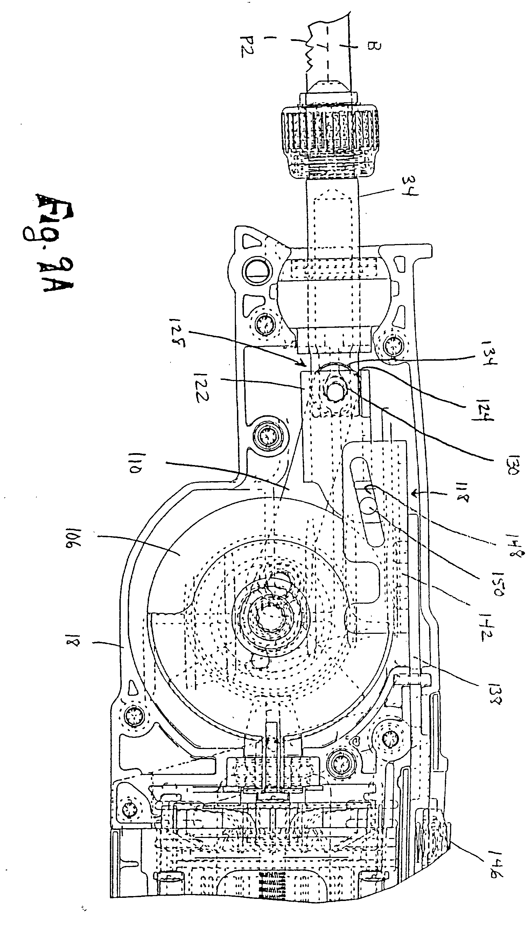

Also, as shown in Fig. 7, the spindle axis 36 and the drive shaft axis 102 are aligned in a vertical plane extending through the body 18. As a result, the motor 26, the drive mechanism 30 and the spindle 34 are provided in a more compact arrangement in the body 18.

In the illustrated construction, the spindle 34 is supported by the forward end of the body 18 for reciprocating motion and, in some aspects of the invention, for rocking motion relative to the body 18. Such reciprocating and rocking motion is facilitated by a spherical bearing sleeve 114 pivotably mounted within the forward end of the body 18. The bearing sleeve 114 rocks relative to the body 18, and the spindle 34 reciprocates through the bearing sleeve 114. In other constructions, the bearing sleeve 114 may be substituted with a plain bearing sleeve mounted in the body 18 for pivoting motion about a horizontal axis.

In the illustrated construction, a spindle 34 is designed to move in at least three distinct motions: a down-cutting rocking motion; a neutral or non-rocking motion; and an up-cutting rocking motion. To provide such motions, the reciprocating saw 10 includes a rocker motion mechanism 118. The rocker motion mechanism 118 is similar to the mechanism disclosed in pending U.S. Patent Application Serial Nos. 09/474,033, filed December 28, 1999; 09/606,867, filed June 29, 2000; and 09/606,955, filed June 29, 2000, which are hereby incorporated by reference.

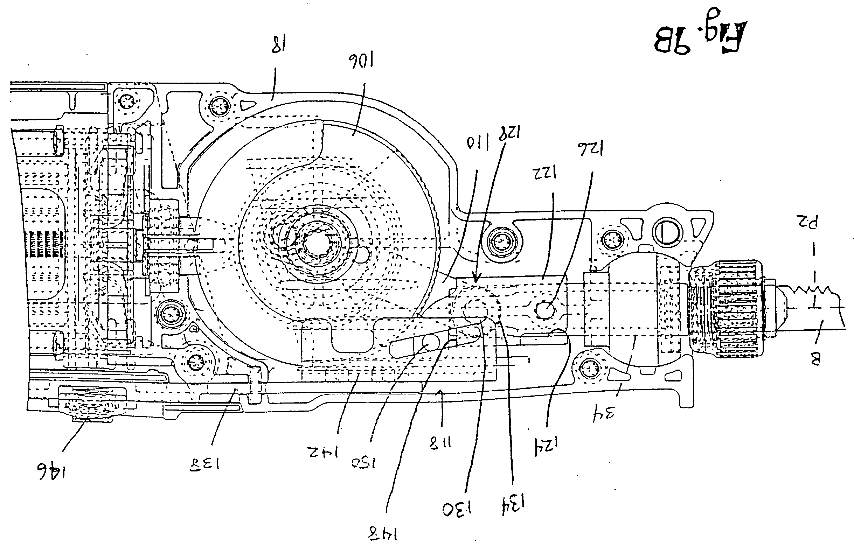

To summarize, the down-cutting rocking motion of the saw blade B is illustrated in Figs. 8A and 8B. During the cutting stroke (moving from the position shown in Fig. 8A to position shown in Fig. 8B), the spindle 34 is retracted, and the rearward end of the spindle 34 moves upwardly. As a result, a point on the saw blade B (e.g., the tip of the saw blade B) follows a curvilinear path P1, moving both toward the body 18 (to the right in Figs. 8A and 8B) and downwardly in the cutting direction of the teeth. During the return stroke (moving from the position shown in Fig. 8B to the position shown in Fig. 8A), the tip of the saw blade B returns along this same path P1 (moves away from the body 18) (to the left in Figs. 8A and 8B) and upwardly in the non-cutting direction opposite to the teeth as the spindle 34 is extended and as the rearward end of the spindle 34 moves downwardly. The tip of the saw blade B thus follows the same path P1 in the return stroke and in the cutting stroke.

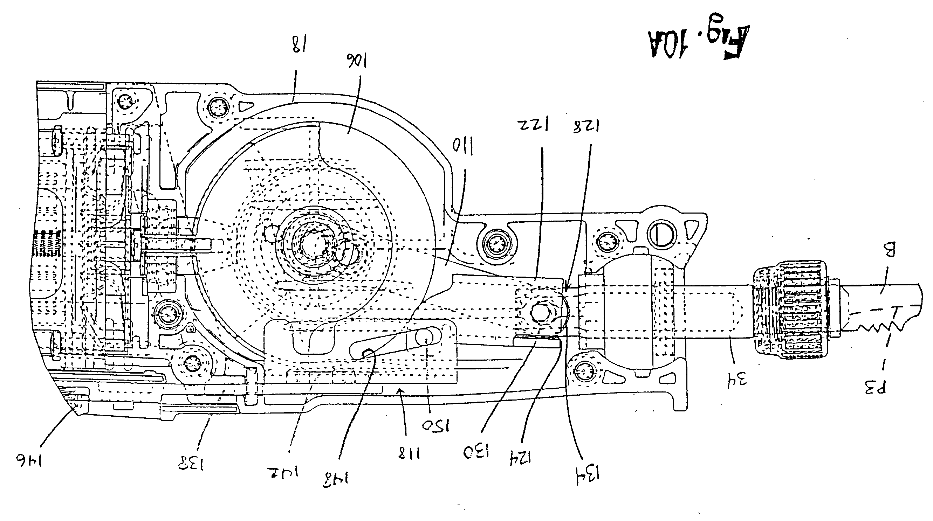

The neutral, non-rocking motion of the saw blade B is illustrated in Figs. 9A and 9B. During the cutting stroke (from the position shown in Fig. 9A to the position shown in Fig. 9B), the spindle 34 is retracted, and the rearward end of the spindle 34 moves along a neutral path P2. As a result, the tip of the saw blade B follows a linear path, moving only toward the body 18 (to the right in Figs. 9A and 9B). During the return stroke (moving from the position shown in Fig. 9B to the position shown in Fig. 9A), the tip of the saw blade B returns along this linear path P2 (moving only away from the body 18) (to the left in Figs. 9A and 9B), as the spindle 34 is extended and as the rearward end of the spindle 34 moves along the neutral path. The tip of the saw blade B thus follows the same linear path P2 in the return stroke and in the cutting stroke.

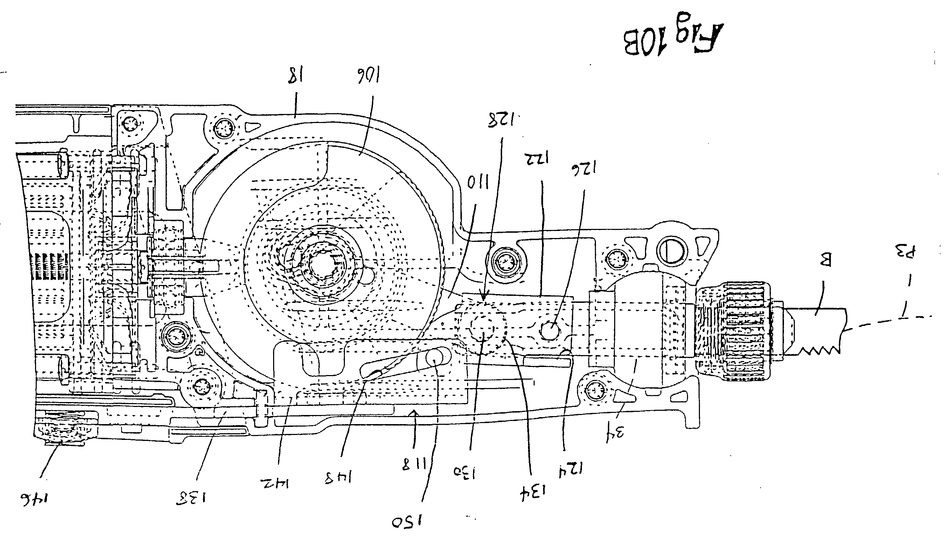

Finally, the up-cutting rocking motion of the saw blade B is illustrated in Figs. 10A and 10B. During the cutting stroke (moving from the position shown in Fig. 10A to the position shown in 10B), the spindle 34 is retracted, and the rearward end of the spindle 34 moves downwardly. As a result, the tip of the saw blade B follows a curvilinear path P3 (different from the curvilinear path illustrated in the down-cutting rocking motion in Figs. 8A and 8B), moving both toward the body 18 (to the right in Figs. 10A and 10B) and upwardly. During the return stroke (moving from the position shown in Fig. 10B to the position shown in Fig. 10A), the tip of the saw blade B returns along this curvilinear path P3 (moves away from the body 18) (to the left in Figs. 10A and 10B, and downwardly) as the spindle 34 is extended and as the rearward end of the spindle 34 moves upwardly. The tip of the saw blade B thus follows the same curvilinear path P3 in the return stroke and in the cutting stroke.

With the hand grip 22 in the first position (shown in Figs. 1A and 2A) and with the saw blade B in a reversed (relative to the position shown in Fig. 1A), up-cutting orientation relative to the spindle 34 (shown in Fig. 10B), the rocker motion mechanism 118 may be adjusted to provide up-cutting rocking motion of the saw blade B. The reciprocating saw 10 provides substantially flush (relative to the housing assembly 14) cutting while still providing a rocker motion to the saw blade B.

In the illustrated construction, the rocker motion mechanism 118 includes a movable track member 122 defining a track 124. The track member 122 is preferably supported for pivoting movement relative to the body 18 about a pivot pin 126. A follower assembly 128 is connected to the spindle 34 and moves along the track 124 as the spindle 34 reciprocates. In the illustrated construction, the follower assembly 128 includes a pin 130 and a track follower 134 supported on the pin 130 and engaging the track 124.

It should be understood that, in other constructions (not shown), a track (similar to the track 124) may be provided on the spindle 34, and a track follower (similar to the track follower 134) may be supported on the body 18.

In the illustrated construction, the follower assembly 128 includes a track follower 134 (one shown) supported on each end of the pin 130, and the track member 122 defines a track 124 (one shown) on each side of the spindle 34. Engagement of the track followers 134 (and the ends of the pin 130) in the respective tracks 124 substantially prevents rotation of the spindle 34 about the spindle axis 36.

The rocker motion mechanism 118 also includes a movable actuating member 138 for moving the track member 122 between positions corresponding to the down-cutting rocking motion (Figs. 8A and 8B), neutral, non-rocking cutting motion (Figs. 9A and 9B) and up-cutting rocking motion (10A and 10B). The actuating member 138 includes a portion 142 engaging the track member 122 and an actuator portion 146, which is engageable by the operator to move the actuating member 138 and, thereby, to move the track member 122 between the various cutting motion positions. In the illustrated construction, the engaging portion 142 defines a slot 148 and the track member 122 includes a projection 150 engaging in the slot 148.

In a rearward position of the actuating member 138 (Figs. 8A and 8B), the track member 122 is pivoted to provide the down-cutting rocking motion. In an intermediate position (Figs. 9A and 9B), the track member 122 is pivoted to provide the neutral, non-rocking cutting motion. Finally, in a forward position (Figs. 10A and 10B) of the actuating member 138, the track member 122 is pivoted to provide the up-cutting rocking motion. In the illustrated construction, the actuating member 138 and the track member 122 are positionable and maintained in these three, defined positions by a detent or other similar arrangement (not shown). It should be understood that the actuating member 138 and the track member 122 are positionable in any position between these defined position to provide corresponding intermediate cutting motions.

Various features of the invention are set forth in the following claims.

## Claims

1. A reciprocating saw comprising:
a reciprocable spindle for supporting a saw blade for reciprocating sawing movement;
a body housing a motor and a drive mechanism driven by the motor, the drive mechanism being operably connected to the spindle for causing reciprocation of the spindle, the body having a forward end supporting the spindle and a rearward end; and
a hand grip connected to the rearward end of the body, the hand grip being supported for movement relative to the body.

2. A reciprocating saw as set forth in claim 1, wherein the hand grip is supported for pivoting movement relative to the body.

3. A reciprocating saw as set forth in claim 1, wherein the hand grip has a first end movably connected to the body and a second end.

4. A reciprocating saw as set forth in claim 3, wherein the first end of the hand grip is pivotally connected to the body.

5. A reciprocating saw as set forth in claim 3, and further comprising a battery connected to the second end.

6. A reciprocating saw as set forth in claim 5, wherein the battery is removably attached to said second end of the hand grip.

7. A reciprocating saw as set forth in claim 6, wherein the hand grip defines a grip axis, the first end and the second end being spaced apart along the grip axis, and wherein the battery is slidably attached to the hand grip in a direction generally perpendicular to the grip axis.

8. A reciprocating saw as set forth in claim 1, wherein the rearward end of the body houses the motor, and wherein the hand grip is pivotally connected to the body rearwardly of the motor.

9. A reciprocating saw as set forth in claim 1, wherein the spindle has a direction of reciprocation, and wherein the hand grip is connected to the rearward end of the body for pivoting movement about a pivot axis, the pivot axis being generally perpendicular to the direction of reciprocation.

10. A reciprocating saw as set forth in claim 9, wherein the spindle defines a spindle axis, and wherein the pivot axis is below the spindle axis.

11. A reciprocating saw as set forth in claim 1, and further comprising a locking mechanism for locking the hand grip in a position relative to the body.

12. A reciprocating saw as set forth in claim 11, wherein the locking mechanism includes a recess defined by one of the body and the hand grip and a projection defined by an other of the body and the hand grip, the projection being engageable in the recess to lock the hand grip in a position relative to the body.

13. A reciprocating saw as set forth in claim 12, wherein the locking mechanism includes a first recess and a second recess defined by the one of the body and the hand grip, and wherein the projection is engageable in the first recess to lock the hand grip in a first position relative to the body and in the second recess to lock the hand grip in a second position relative to the body.

14. A reciprocating saw as set forth in claim 1, and further comprising a switch assembly operable to electrically connect the motor to a power source, at least a portion of the switch assembly being supported on the hand grip for movement with the hand grip relative to the body and relative to the motor.

15. A reciprocating saw as set forth in claim 14, and further comprising a wiring arrangement electrically connecting the switch assembly to the motor and accommodating movement of the switch assembly with the hand grip relative to the body and relative to the motor.

16. A reciprocating saw as set forth in claim 1, wherein the hand grip has a first end pivotally connected to the rearward end of the body and a second end, and wherein the hand grip includes a trigger positioned intermediate the first end and the second end.

17. A reciprocating saw comprising:
a reciprocable spindle for supporting a saw blade for reciprocating sawing movement;
a body housing a motor and a drive mechanism driven by the motor, the drive mechanism being operably connected to the spindle for causing reciprocation of the spindle, the body having a forward end supporting the spindle and a rearward end; and
a hand grip connected to the rearward end of the body for pivoting movement relative to the body.

18. A reciprocating saw as set forth in claim 17, wherein the spindle has a direction of reciprocation, and wherein the hand grip is pivotable about a pivot axis, the pivot axis being generally perpendicular to the direction of reciprocation.

19. A reciprocating saw as set forth in claim 17, wherein the spindle defines a spindle axis, and wherein the hand grip is pivotable about a pivot axis, the pivot axis being below the spindle axis.

20. A reciprocating saw as set forth in claim 17, wherein the hand grip has a first end pivotally connected to the rearward end of the body and a second end, and wherein the reciprocating saw further comprises a battery connected to the second end of the hand grip.

21. A reciprocating saw as set forth in claim 20, wherein the battery is slidably and removably connected to the second end of the hand grip.

22. A reciprocating saw as set forth in claim 17, wherein the rearward end of the body houses the motor, and wherein the hand grip is pivotally connected to the body rearwardly of the motor.

23. A reciprocating saw as set forth in claim 17, and further comprising a locking mechanism for locking the hand grip in a pivoted position relative to the body.

24. A reciprocating saw as set forth in claim 23, wherein the locking mechanism includes a recess defined by one of the body and the hand grip and a projection defined by an other of the body and the hand grip, the projection being engageable in the recess to lock the hand grip in a pivoted position relative to the body.

25. A reciprocating saw as set forth in claim 24, wherein the locking mechanism includes a first recess and a second recess defined by the one of the body and the hand grip, and wherein the projection is engageable in the first recess to lock the hand grip in a first pivoted position relative to the body and in the second recess to lock the hand grip in a second pivoted position relative to the body.

26. A reciprocating saw as set forth in claim 17, and further comprising a switch assembly operable to electrically connect the motor to a power source, at least a portion of the switch assembly being supported on the hand grip for pivoting movement with the hand grip relative to the body and relative to the motor.

27. A reciprocating saw as set forth in claim 26, and further comprising a wiring arrangement electrically connecting the switch assembly to the motor and accommodating pivoting movement of the switch assembly with the hand grip relative to the body and relative to the motor.

28. A reciprocating saw as set forth in claim 26, wherein the hand grip has a first end pivotally connected to the rearward end of the body and a second end, and wherein the switch assembly includes a trigger positioned intermediate the first end and the second end.

29. A reciprocating saw comprising:
a reciprocable spindle for supporting a saw blade for reciprocating sawing movement;
a body housing a motor and a drive mechanism driven by the motor, the drive mechanism being operably connected to the spindle for causing reciprocation of the spindle, the body having a forward end supporting the spindle and a rearward end; and
a hand grip connected to the body rearwardly of the motor for pivoting movement relative to the body.

30. A reciprocating saw as set forth in claim 29, wherein the motor includes a drive shaft defining a shaft axis, and wherein the hand grip is pivotable about a pivot axis, the pivot axis being generally perpendicular to the shaft axis.

31. A reciprocating saw as set forth in claim 29, wherein the spindle defines a spindle axis, and wherein the motor includes a drive shaft defining a shaft axis, the shaft axis and the spindle axis lying in a vertical plane through the body.

32. A reciprocating saw as set forth in claim 29, wherein the hand grip has a first end pivotally connected to the body rearwardly of the motor and a second end.

33. A reciprocating saw comprising:
a reciprocable spindle for supporting a saw blade for reciprocating sawing movement;
a motor;
a drive mechanism including
a gear driven by the motor for rotation about a gear axis, and
a drive arm connected between the gear and the spindle to cause reciprocation of the spindle upon rotation of the gear;
a body housing the drive mechanism, the body having a forward end supporting the spindle and a rearward end; and
a hand grip connected to the body for pivoting movement with respect to the body about a pivot axis, the pivot axis being generally parallel to and rearward of the gear axis.

34. A reciprocating saw comprising:
a reciprocable spindle for supporting a saw blade for reciprocating sawing movement, the spindle defining a spindle axis;
a motor including a drive shaft defining a shaft axis;
a drive mechanism driven by the motor, the drive mechanism being operably connected to the spindle for causing reciprocation of the spindle; and
a housing assembly including
a body portion housing the motor and the drive mechanism, the shaft axis and the spindle axis lying in a vertical plane through the body portion, the body portion having a forward end supporting the spindle and a rearward end, and
a hand grip portion connected to the body portion.

35. A reciprocating saw as set forth in claim 34, wherein the hand grip is movably connected to the body.

36. A reciprocating saw as set forth in claim 34, wherein the hand grip is pivotally connected to the body.

37. A reciprocating saw as set forth in claim 36, wherein the hand grip is pivotable about a pivot axis, the pivot axis being generally perpendicular to the spindle axis.

38. A reciprocating saw as set forth in claim 36, wherein the hand grip is pivotable about a pivot axis, the pivot axis being generally perpendicular to the shaft axis.

39. A reciprocating saw as set forth in claim 34, wherein the hand grip has a first end pivotally connected to the rearward end of the body and a second end.

40. A reciprocating saw as set forth in claim 39, wherein the first end of the hand grip is connected to the body rearwardly of the motor.

41. A reciprocating saw comprising:
a reciprocable spindle for supporting a saw blade for reciprocating sawing movement;
a body housing a motor and a drive mechanism driven by the motor, the drive mechanism being operably connected to the spindle for causing reciprocation of the spindle, the body having a forward end supporting the spindle and a rearward end; and
a hand grip connected to the rearward end of the body for movement relative to the motor and relative to the drive mechanism.

42. A reciprocating saw as set forth in claim 41, wherein the hand grip is connected to the body for pivoting movement relative to the motor and relative to the drive mechanism.

43. A reciprocating saw as set forth in claim 41, wherein the hand grip is connected to the body for movement relative to the body.

44. A reciprocating saw as set forth in claim 41, and further comprising a switch assembly operable to electrically connect the motor to a power source, the switch assembly being supported on the hand grip for movement with the hand grip relative to the motor.

45. A reciprocating saw as set forth in claim 44, and further comprising a wiring arrangement electrically connecting the switch assembly to the motor and accommodating movement of the switch assembly with the hand grip relative to the motor.

46. A reciprocating saw comprising:
a reciprocable spindle for supporting a saw blade for reciprocating sawing movement;
a body housing a motor and a drive mechanism driven by the motor, the drive mechanism being operably connected to the reciprocable spindle for causing reciprocation of the spindle, the body having a forward end supporting the spindle and a rearward end and defining a body axis, the forward end of the body providing a forward-most portion of the reciprocating saw, the reciprocating saw also having a rearward-most portion relative to the body axis and a length defined between the forward-most portion and the rearward-most portion; and
a hand grip connected to the body and movable relative to the body to change the length of the reciprocating saw.

47. A reciprocating saw as set forth in claim 46, wherein the hand grip is movable relative to the body between a first position, in which the reciprocating saw has a first length, and a second position, in which the reciprocating saw has a second length, the second length being different from the first length.

48. A reciprocating saw as set forth in claim 46, wherein the hand grip is pivotally connected to the body, the hand grip being pivotable to change the length of the reciprocating saw.

49. A reciprocating saw as set forth in claim 48, wherein the hand grip is pivotable relative to the body between a first pivoted position, in which the reciprocating saw has a first length, and a second pivoted position, in which the reciprocating saw has a second length, the second length being different from the first length.

50. A reciprocating saw as set forth in claim 46, wherein the hand grip defines a grip axis and has a first end connected to the body and a second end spaced from the first end along the grip axis, and wherein a portion of the second end of the hand grip provides the rearward-most portion of the reciprocating saw.

51. A reciprocating saw as set forth in claim 46, wherein the hand grip defines a grip axis and has a first end connected to the body and a second end spaced from the first end along the grip axis, and wherein the reciprocating saw further comprises a battery connected to the second end

52. A reciprocating saw as set forth in claim 51 wherein a portion of the battery provides the rearward-most portion of the reciprocating saw.

53. A reciprocating saw as set forth in claim 52, wherein the battery is selectively connectable to the second end of the hand grip in a first battery position, in which a first portion of the battery provides the rearward-most portion of the reciprocating saw, and a second battery position, in which a second portion of the battery provides the rearward-most portion of the reciprocating saw.

54. A reciprocating saw as set forth in claim 51, wherein the battery is removably attached to said second end of the hand grip.

55. A reciprocating saw as set forth in claim 54, wherein the battery is slidably attached to the hand grip in a direction generally perpendicular to the grip axis.

56. A housing assembly for a reciprocating saw, the reciprocating saw including a reciprocable spindle for supporting a saw blade for reciprocating sawing movement, a motor and a drive mechanism driven by the motor, the drive mechanism being operably connected to the reciprocable spindle for causing reciprocation of the spindle, the housing assembly comprising:
a body for housing the motor and the drive mechanism and having a forward end supporting the spindle and a rearward end; and
a hand grip connected to the rearward end of the body, the hand grip being supported for movement relative to the body.

57. A housing assembly as set forth in claim 56, wherein the hand grip is supported for pivoting movement relative to the body.

58. A housing assembly as set forth in claim 57, wherein the body defines a body axis, and wherein the hand grip is pivotable about a pivot axis, the pivot axis being generally perpendicular to the body axis.

59. A housing assembly as set forth in claim 56, wherein the hand grip has a first end pivotally connected to the rearward end of the body and a second end.

60. A housing assembly as set forth in claim 56, wherein the body defines a body axis, wherein the forward end of the body provides a forward-most portion of the housing assembly relative to the body axis, the housing assembly also having a rearward-most portion relative to the body axis and a length defined between the rearward-most portion and the forward-most portion, and wherein the hand grip is movable relative to the body to change the length of the housing assembly.

61. A housing assembly as set forth in claim 60, wherein the hand grip is pivotally connected to the body, the hand grip being pivotable relative to the body to change the length of the housing assembly.

62. A housing assembly as set forth in claim 60, wherein a portion of the hand grip provides the rearward-most portion of the housing assembly.

63. A housing assembly as set forth in claim 56, wherein the hand grip includes a first grip surface, and wherein the forward end of the body includes a second grip surface.

64. A housing assembly as set forth in claim 63, wherein the body defines a body axis, and wherein, when the hand grip is in a first position relative to the body, the first grip surface and the second grip surface are substantially aligned relative to the body axis.

65. A housing assembly as set forth in claim 64, wherein, when the hand grip is in a second position relative to the body, the first grip surface and the second grip surface are misaligned relative to the body axis.

66. A housing assembly as set forth in claim 56, wherein the body defines a body axis, and wherein the hand grip defines a grip axis which intersects the body axis and which defines an obtuse angle with respect to the body axis.

67. A reciprocating saw comprising:
a reciprocable spindle for supporting a saw blade for reciprocating sawing movement;
a motor;
a drive mechanism driven by the motor and operably connected to the spindle for causing reciprocation of the spindle;
a body housing at least one of the motor and the drive mechanism, the body having a forward end supporting the spindle and a rearward end, the body providing a first grip surface for an operator's first hand, the body having a longitudinal axis; and
a hand grip connected to the body, the hand grip providing a second grip surface for the operator's second hand, the hand grip being supported for movement relative to the body between a first position, in which the first grip surface and the second grip surface are generally aligned with and along the longitudinal axis, and a second position, in which the second grip surface is misaligned with the longitudinal axis.

68. A reciprocating saw as set forth in claim 67, wherein, in the second position, the second grip surface defines an obtuse angle with respect to the longitudinal axis.

69. A reciprocating saw as set forth in claim 67, wherein, in the second position, the second grip surface is substantially perpendicular to the longitudinal axis.

70. A reciprocating saw as set forth in claim 67, wherein the hand grip is connected to the rearward end of the body.

71. A reciprocating saw as set forth in claim 67, wherein the hand grip is connected to the body for pivotal movement between the first position and the second position.

72. A reciprocating saw as set forth in claim 67, wherein the first grip surface and the second grip surface are generally cylindrical.

73. A reciprocating saw as set forth in claim 67, wherein the body houses the motor and the drive mechanism.

74. A reciprocating saw comprising:
a reciprocable spindle for supporting a saw blade for reciprocating sawing movement;
a motor;
a drive mechanism driven by the motor, the drive mechanism being operably connected to the spindle for causing reciprocation of the spindle;
a housing assembly housing the motor and the drive mechanism, the housing assembly defining a housing assembly axis and having a forward end supporting the spindle and a rearward end, the forward end providing a first grip surface for an operator's first hand, the rearward end providing a second grip surface for the operator's second hand, the first grip surface and the second grip surface being aligned with and along the housing assembly axis; and
a battery removably connected to the housing assembly and electrically connectable with the motor, the battery being connectable to the rearward end of the housing assembly in a direction generally perpendicular to the housing assembly axis.

75. A reciprocating saw as set forth in claim 74, wherein the battery is electrically connectable to the motor in a direction generally perpendicular to the housing assembly axis.

76. A reciprocating saw as set forth in claim 74, wherein the housing assembly includes
a body housing the drive mechanism and providing the forward end of the housing assembly and the first grip surface, the body having a body rearward end, and
a hand grip connected to the body rearward end and providing the rearward end of the housing assembly and the second grip surface, the battery being connectable to the hand grip.

77. A reciprocating saw as set forth in claim 76, wherein the hand grip is movably connected to the body.

78. A reciprocating saw as set forth in claim 77, wherein the hand grip is pivotally connected to the body.

79. A reciprocating saw as set forth in claim 76, wherein the hand grip defines a hand grip axis providing the housing assembly axis.

80. A reciprocating saw as set forth in claim 79, wherein the battery is connectable to the hand grip in a direction generally perpendicular to the hand grip axis.

81. A method of operating a reciprocating saw, the reciprocating saw including a reciprocable spindle for supporting a saw blade for reciprocating sawing movement, a motor, a drive mechanism driven by the motor and operably connected to the reciprocable spindle for causing reciprocation of the spindle, a body housing at least one of the motor and the drive mechanism, the body having a forward end supporting the spindle and a rearward end, the body providing a first grip surface for an operator's first hand, the body having a longitudinal axis, and a hand grip connected to the body, the body providing a second grip surface for the operator's second hand, said method comprising the acts of:
positioning the hand grip relative to the body such that the first grip surface and the second grip surface are generally aligned with and along the longitudinal axis; and
moving the hand grip relative to the body such that the second grip surface is misaligned with the longitudinal axis.

82. A method as set forth in claim 81, wherein the moving act includes moving the hand grip to a position in which the second grip surface defines an obtuse angle with respect to the longitudinal axis.

83. A method as set forth in claim 81, wherein the moving act includes moving the hand grip to a position in which the second grip surface is substantially perpendicular to the longitudinal axis.

84. A method as set forth in claim 81, wherein the moving act includes pivoting the hand grip relative to the body.
